# DEMANDE DE BREVET EUROPEEN

(11) **EP 1 197 479 A1**
(43) Date de publication de la demande: **17.04.2002**
(21) Numéro de dépôt: 00870229.2
(22) Date de dépôt: 10.10.2000
(51) Int. Cl.: C04B 28/02, E04F 15/12, E04C 2/04

(54) **Béton de sol coulé**

(71) Demandeur: Idéal Concept SPRL, 4100 Seraing (BE)
(72) Inventeur: Labro, Thierry, 4121 Neupre (BE)
(74) Mandataire: Van Malderen, Michel

(57) **Abrégé**

La présente invention se rapporte à un béton de sol coulé dans la masse, dont la composition comprend des granulats concassés calibrés, de la microsilice de granulométrie inférieure à 18 µm, du ciment, au moins un plastifiant et de l'eau.

## Description

### Objet de l'invention

La présente invention se rapporte à un nouveau type de béton coulé dans la masse, de composition particulière, ainsi qu'à l'utilisation qui en est faite comme revêtement de sol.

L'invention se rapporte également au procédé permettant la mise en oeuvre de ce béton.

### Etat de la technique

On connaît l'adjonction de concassés lors de la fabrication de dalles ou carrelages, comme par exemple dans le "granito", en vue de donner un aspect esthétique particulier aux revêtements de sol, tel que l'aspect de la pierre naturelle.

L'inconvénient dans la préparation de ce type de produit est qu'il nécessite souvent l'adjonction de composés synthétiques tels que résine ou polyuréthane par exemple.

Un autre inconvénient potentiel est que la mise en oeuvre ne peut pas généralement se faire sous forme d'une chape ou dalle continue coulée. De plus, l'épaisseur obtenue n'est en général que de 1,5 ou deux centimètres et ces revêtements ne sont pas conçus pour un passage important.

Dans le domaine du revêtement de murs extérieurs de construction, on connaît le document JP-A-11 060 320. Un moule est partiellement rempli d'une chape de ciment ou d'argile dans laquelle sont incorporées des particules de pierres naturelles. La partie restante du moule est remplie au moyen de béton gâché. Après prise du béton, la chape est enlevée, ce qui fait apparaître une surface brute de béton avec des pierres incorporées. Le fini de surface rugueux donne l'aspect de pierre naturelle. De plus, la liaison des pierres ajoutées avec le béton est suffisante pour l'application considérée. Toutefois, la cohésion obtenue n'est pas compatible avec les exigences d'un revêtement de sol.

### Buts de l'invention

La présente invention vise à fournir un revêtement de sol continu de type dalle ou chape, à base de béton, réalisé uniquement en matériaux naturels.

Un but complémentaire de l'invention est d'obtenir un revêtement de sol, intérieur ou extérieur, qui puisse être coulé et poli sur site.

Un autre but de l'invention est l'obtention d'un béton haute densité pour revêtement de sol, résistant à l'usure et donc compatible avec un grand trafic.

Enfin, l'invention a pour but de fournir un produit bon marché en comparaison avec la pierre naturelle sciée et polie, tout en étant d'entretien aisé.

### Résumé de l'invention

La présente invention concerne une nouvelle composition pour béton de sol coulé dans la masse, caractérisée en ce qu'elle comprend :
- des granulats concassés calibrés ;
- de la microsilice de granulométrie inférieure à 18 µm ;
- du ciment ;
- au moins un plastifiant ;
- de l'eau.

De préférence, les granulats concassés sont en pierre naturelle, telle que marbre, granit, quartz ou en éclats de verre.

Avantageusement, la microsilice présente une granulométrie inférieure ou égale à 1 µm et de préférence comprise entre 0,1 et 0,2 µm.

De préférence, le ciment est un ciment portland de classe 32.5 ou 42.5 et/ou du ciment blanc et la composition contient au moins 90% de pierre naturelle.

L'invention concerne également un béton de sol coulé dans la masse sous forme de dalle ou chape présentant la composition telle que décrite plus haut, dont l'épaisseur est comprise entre 5 et 10 cm et la densité est d'environ 2 500 kg/m³.

Avantageusement, le béton selon l'invention présente un aspect visuel caractéristique d'une ségrégation régulière des granulats concassés.

Selon une modalité de réalisation particulière, des effets de surface sont obtenus par séparation au moyen de profilés, de préférence de type cornière en aluminium ou en laiton, par une combinaison déterminée de couleurs ou par incorporation de dessins ou sigles. La texture dudit béton est granulée ou lisse et mate ou brillante.

Le béton de l'invention résiste temporairement à une température allant jusqu'à 300°C. Il présente une résistance mécanique d'au moins 25 N/mm² et une charge de rupture d'au moins 50 kN, si les granulats concassés composant ledit béton sont en petit granit. Ledit béton présente alternativement une résistance mécanique d'au moins 15 N/mm² et une charge de rupture d'au moins 10 kN, si les granulats concassés composant ledit béton sont en éclats de verre.

De préférence, la dalle ou chape coulée en béton selon l'invention a une superficie d'au moins 1 m².

Avantageusement, ledit béton résiste aux acides jusqu'à une concentration de 30%, aux graisses, huiles et autres dérivés de pétrole.

Un autre aspect de la présente invention concerne un procédé pour la réalisation d'un béton de sol coulé dans la masse, dont la composition comprend des granulats concassés calibrés, de la microsilice de granulométrie inférieure à 18 µm, du ciment, au moins un plastifiant et de l'eau. Ce procédé est caractérisé par les étapes suivantes :
- on verse les composants du béton dans un malaxeur, en commençant par les granulats concassés calibrés ;
- on coule le béton liquide obtenu après malaxage sous forme d'une dalle ou chape autonivellante ;
- après séchage de ladite dalle ou chape, on la polit et on en assure la protection par cristallisation au moyen d'une machine à polir et d'un produit de polissage, de préférence à base d'acide oxalique ou de silicium.

Avantageusement, les différentes étapes dudit procédé sont toutes réalisées sur le site de mise en oeuvre finale.

De manière particulièrement avantageuse, un polissage de rénovation ultérieur de la dalle de béton peut être réalisé, suivant le degré d'usure.

De préférence, le béton de sol coulé dans la masse, selon l'invention, est utilisé comme revêtement de sol intérieur ou extérieur.

La présente invention présente les principaux avantages suivants :
- réalisation d'une dalle ou chape en béton haute densité coulé dans la masse, ayant l'aspect de la pierre naturelle et sans adjuvant synthétique telle que résine ou autre ;
- ce béton présente une très haute résistance mécanique, au feu et à l'usure, ce qui est compatible avec un revêtement de sol destiné à un trafic important ;
- toutes les étapes du procédé de mise en oeuvre, y compris le polissage final, sont réalisées sur site ;
- mise en oeuvre aisée et rapide par un seul intervenant (200 - 300 m² par jour) ;
- prix de revient beaucoup plus faible que pour la pierre naturelle, avec opportunité de valorisation des chutes de petit granit ou marbre par exemple ;
- entretien aisé.

### Brève description des figures

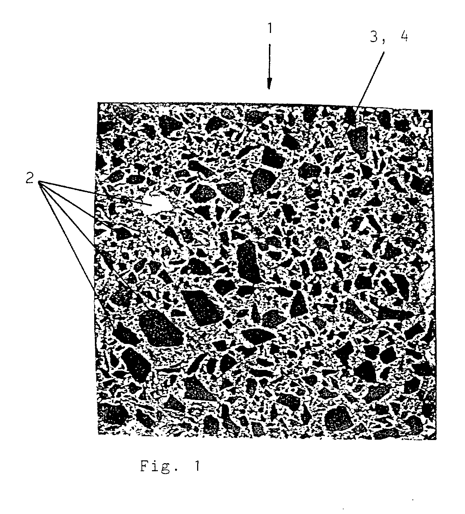

La figure 1 est une reproduction de la surface apparente polie d'un échantillon de béton selon l'invention.

### Description d'une forme d'exécution préférée de l'invention

### Composition et caractéristiques générales

Le béton selon l'invention est constitué de granulats concassés à haute résistance physique. Ce concept, situé à mi-chemin entre la pierre naturelle et le carrelage, est particulièrement adapté aux zones commerciales, hospitalières et privées où l'on requiert des exigences esthétiques et techniques élevées. La particularité de l'invention consiste à réduire la granulométrie de manière à pouvoir contrôler de manière précise la ségrégation des concassés.

L'aspect final du sol est celui de la pierre naturelle reconstituée (marbres, granit, quartz, etc.), comme le montre la figure 1. La destination est essentiellement la pose intérieure, certaines exécutions étant réalisables en extérieur (sols semi-polis ou bouchardés).

Selon une forme particulière de l'invention, le béton 1 est constitué de concassé calibré 2 de 0/2 à 7/14, de microsilice 3 dont la granulométrie est comprise entre 0,1 et 0,2 µm, de "filler" 4 de granulométrie 80 µm, de ciment, de superplastifiant et d'eau. Le filler est un concassé de très fine granulométrie. Le superplastifiant est un adjuvant au ciment, remplaçant un certain pourcentage d'eau de gâchage.

Le concassé est obtenu à partir de marbres, de granit, de quartz ou de verres enrobés. Le ciment est du ciment portland de classe de résistance 32.5 ou 42.5 ou encore du ciment blanc (CBR).

Comme accessoires, on utilise des profilés d'arrêt de type cornière en aluminium ou en laiton. Selon le choix du client, les joints de dilatation sont soit un joint cornière ou le trait de scie avec joint souple. On peut utiliser tout autre profilé ainsi qu'une paillasse de diamètre 5 mm ou adapté, afin d'obtenir du béton armé.

L'épaisseur du produit fini est de 5 à 10 cm pour une densité de 2 500 kg/m³.

### Aspect, texture

Au niveau de l'aspect visuel, des effets de surface sont possibles par séparation au moyen de profilés, par le jeu des couleurs ou par incorporation de dessins ou sigles.

On obtient une reconstitution de pierre naturelle jusqu'à concurrence de 92%. Pour le petit granit par exemple, le produit obtenu a l'aspect de brut de sciage.

En l'absence de joints, vu la spécificité de ce type de revêtement de sol, les petites irrégularités locales d'aspect ne sont perceptibles que sur sols fractionnés, notamment en éclairage oblique ou rasant.

La texture de la surface est granulée, lisse ou brillante selon le choix de polissage utilisé. La formation de noeuds est rendue possible par la ségrégation naturelle de la pierre. En ce qui concerne la teinte, on s'est limité à cinq couleurs de base en association avec toutes les couleurs des pierres naturelles.

### Performances mécaniques

Des essais mécaniques et d'absorption d'eau ont été réalisés en laboratoire, conformément aux normes belges.

Des essais de compression ont été réalisés sur des cubes prélevés par sciage (éprouvettes), suivant NBN B15-220 (Tableau 1). Ces données permettent d'attribuer au béton testé une classe de résistance donnée. La classe de résistance est C20/25 et C25/30 (pour 20 à 25 et 25 à 30 N/mm² respectivement).

**Tableau 1**

| ***Type*** | ***Dimensions (mm)*** | | ***Charge de rupture (kN)*** | ***Résistance (N/mm***^{***2***}***)*** |
|---|---|---|---|---|
| | ***S*** | ***h*** | | |
| petit granit | 45,15 x 44,97 | 46,71 | 60,0 | 29,6 |
| éclat de verre | 25,58 x 24,63 | 26,82 | 11,3 | 17,9 |

Des essais d'usure ont été réalisés suivant NBN B15-223, après un parcours de 3 000 m. L'usure était de 2,74 mm pour le petit granit et de 3,91 mm pour l'éclat de verre. Ces résultats donnent un équivalent à une classe 4 (u.p.e.c.).

Des essais d'absorption d'eau ont été réalisés par immersion suivant NBN B15-215. Dans le tableau 2, W est l'absorption d'eau partielle (= (M1-M0)/M0) et A l'absorption d'eau totale (= (M1-M2)/M2).

**Tableau 2**

| ***Type*** | ***Masses constantes (g)*** | | | ***Absorption*** | |
|---|---|---|---|---|---|
| | **MO départ** | **M1 humide** | **M2 sèche** | **W(%)** | **A(%)** |
| petit granit | 2 415 | 2 532 | 2 359 | 4,84 | 7,33 |
| éclat de verre | 1 935 | 2 002 | 1 828 | 3,46 | 9,52 |

### Performances au feu et thermiques

Le béton de l'invention peut supporter des températures allant jusqu'à 300°C mais la résistance diminue en cas de séjour prolongé à cette température.

La température de surface, en cas de chauffage par le sol ne peut de préférence dépasser 28°C, durant les 28 premiers jours. La température de pose est comprise de préférence entre 15 et 25°C. La température d'emploi est comprise de préférence entre -10 et 90°C.

Le béton selon l'invention présente une résistance aux agents chimiques tels que acides de 5 à 30% de concentration, jus de fruits, huiles ou graisses, dérivés de pétrole. Il est sensible aux solvants en dépôt permanent.

### Domaine d'application

En ce qui concerne le domaine d'application, le produit peut s'utiliser dans tout type de revêtement de sol, tant à l'intérieur qu'à l'extérieur, et en particulier dans les galeries commerciales, show-rooms, bâtiments publics, supermarchés, restaurants, hôtels, banques, halls d'entrée, vérandas, terrasses, etc.

### Mise en oeuvre

En ce qui concerne la préparation du chantier et la mise en oeuvre, le support doit être parfaitement préparé, sain, propre et stable. Le contrôle de planéité s'effectue classiquement au moyen d'un laser. On pose des guides en aluminium ou laiton, faisant office de joints de dilatation. Une colle d'accrochage, de type béton contact, est appliquée sur le sol sec avant coulée, pour éviter le décollement.

Le béton selon l'invention présente une très grande facilité de pose et de mise en oeuvre. On verse en premier lieu les granulats dans le malaxeur. La qualité du mélange obtenu dépend de la précision du dosage, de la qualité de malaxage et des conditions de température et d'humidité.

### Entretien et rénovation

L'entretien journalier ou périodique est réalisé de préférence par moppage du sol (lavage des sols à l'auto-laveuse ou au mop humide) . Pour un nettoyage approfondi et le renouvellement de la protection, on procède à la cristallisation du sol à l'aide d'une machine lustrante fonctionnant à grande vitesse (par ex. 900 tours/min.), appelée "high speed" et d'un produit à base d'acide oxalique ou de silicium. Un polissage de rénovation peut être envisagé, suivant l'état d'usure.

## Revendications

1. Composition pour béton de sol coulé dans la masse, **caractérisée en ce qu'**elle comprend :
- des granulats concassés calibrés ;
- de la microsilice de granulométrie inférieure à 18 µm ;
- du ciment ;
- au moins un plastifiant ;
- de l'eau.

2. Composition selon la revendication 1, **caractérisée en ce que** les granulats concassés sont en pierre naturelle, de préférence marbre, granit, quartz ou en éclats de verre.

3. Composition selon la revendication 1 ou 2, **caractérisée en ce que** la microsilice présente une granulométrie inférieure ou égale à 1 µm et de préférence comprise entre 0,1 et 0,2 µm.

4. Composition selon la revendication 1, 2 ou 3, **caractérisée en ce que** le ciment est un ciment portland de classe 32.5 ou 42.5 et/ou du ciment blanc.

5. Composition selon l'une quelconque des revendications précédentes, **caractérisé en ce que** ladite composition contient au moins 90% de pierre naturelle.

6. Béton de sol coulé dans la masse sous forme de dalle ou chape, dont la composition est selon l'une quelconque des revendications précédentes, **caractérisé en ce qu'**il présente une épaisseur comprise entre 5 et 10 cm et une densité d'environ 2 500 kg/m³.

7. Béton selon la revendication 6, **caractérisé en ce qu'**il présente un aspect visuel caractéristique d'une ségrégation régulière des granulats concassés.

8. Béton selon la revendication 6 ou 7, **caractérisé en ce que** des effets de surface sont obtenus par séparation au moyen de profilés, de préférence de type cornière en aluminium ou en laiton, par une combinaison déterminée de couleurs ou par incorporation de dessins ou sigles.

9. Béton selon l'une quelconque des revendications 6 à 8, **caractérisé en ce que** la texture dudit béton est granulée ou lisse et mate ou brillante.

10. Béton selon l'une quelconque des revendications 6 à 9, **caractérisé en ce que** ledit béton résiste temporairement à une température allant jusqu'à 300°C.

11. Béton selon l'une quelconque des revendications 6 à 10, **caractérisé en ce que** ledit béton présente une résistance mécanique d'au moins 25 N/mm² et une charge de rupture d'au moins 50 kN, les granulats concassés composant ledit béton étant du petit granit.

12. Béton selon l'une quelconque des revendications 6 à 10, **caractérisé en ce que** ledit béton présente une résistance mécanique d'au moins 15 N/mm² et une charge de rupture d'au moins 10 kN, les granulats concassés composant ledit béton étant des éclats de verre.

13. Béton selon l'une quelconque des revendications 6 à 12, **caractérisé en ce que** la dalle ou chape coulée a une superficie d'au moins 1 m².

14. Béton selon l'une quelconque des revendications 6 à 13, **caractérisé en ce que** ledit béton résiste aux acides jusqu'à une concentration de 30%, aux graisses, huiles et autres dérivés de pétrole.

15. Procédé pour la réalisation d'un béton de sol coulé dans la masse, dont la composition comprend des granulats concassés calibrés, de la microsilice de granulométrie inférieure à 18 µm, du ciment, au moins un plastifiant et de l'eau ; ledit procédé étant **caractérisé par** les étapes suivantes :
- on verse les composants du béton dans un malaxeur, en commençant par les granulats concassés calibrés ;
- on coule le béton liquide obtenu après malaxage sous forme d'une dalle ou chape autonivellante ;
- après séchage de ladite dalle ou chape, on la polit et on en assure la protection par cristallisation au moyen d'une machine à polir et d'un produit de polissage, de préférence à base d'acide oxalique ou de silicium.

16. Procédé selon la revendication 15, **caractérisé en ce que** les différentes étapes dudit procédé sont toutes réalisées sur le site de mise en oeuvre finale.

17. Procédé selon la revendication 15 ou 16, **caractérisé en ce qu'**un polissage de rénovation ultérieur de la dalle de béton est réalisé, suivant le degré d'usure.

18. Utilisation d'un béton de sol coulé dans la masse, selon l'une quelconque des revendications 6 à 14, comme revêtement de sol intérieur ou extérieur.
